# EUROPEAN PATENT SPECIFICATION

(11) **EP 3 926 296 B1**
(45) Date of publication and mention of the grant of the patent: **24.04.2024**
(21) Application number: 21172806.8
(22) Date of filing: 07.05.2021
(51) Int. Cl.: G01B 11/25, G01B 11/00, G06Q 10/08, B65G 57/00, G06T 7/62

(54) **ALARMING AND MEASURING METHOD FOR VOLUME MEASURING APPARATUS**
ALARMIERUNGS- UND MESSVERFAHREN FÜR VOLUMENMESSVORRICHTUNG
PROCÉDÉ D'ALARME ET DE MESURE POUR APPAREIL DE MESURE DE VOLUME

(30) Priority: 19.06.2020 TW 109120838
(43) Date of publication of application: 22.12.2021
(73) Proprietor: Champtek Incorporated, New Taipei City 23148 (TW)
(72) Inventor: WANG, Kuo-Chun, 23148 New Taipei City (TW); HUANG, Shu-Ying, 23148 New Taipei City (TW)
(74) Representative: 2K Patentanwälte Blasberg Kewitz & Reichel

(56) References cited:
- EP-A1- 3 012 601
- US-A1- 2015 187 091
- US-A1- 2016 109 220
- US-A1- 2018 202 797
- US-A1- 2019 213 389

## Description

### BACKGROUND OF THE DISCLOSURE

### Technical Field

The present disclosure relates to a volume measuring apparatus, and specifically relates to an alarming method for the volume measuring apparatus when the volume measuring apparatus measures a volume of a box.

### Description of Rleated Art

Generally, a shipping company decides a deliverying fee of a goods in accordance with a volume and a weight of the goods, and a warehousing company also decides a storage fee in accordance with the volume and the weight of the goods. Therefore, it is important to such companies to accurately measure the volume and the weight of the goods.

A part of the companies build a measuring system in their own factory, such measuring system includes a conveyor to convey the goods, and includes a measuring apparatus and a weight scale fixedly arranged on a measuring region. When the conveyor transports the goods to the measuring region, the measuring system may measure the size and the weight of the goods through the measuring apparatus and weight scale. This kind of measuring system has a huge body and is immovable, which is inconvenient to be used. Accordingly, another kind of volume measuring apparatus is proposed to the market, which can be carried by a user to measure the volume of the goods anytime, anywhere.

When carrying the above volume measuring apparatus, the user needs to hold the volume measuring apparatus by a hand to aim at a target goods, and the volume of the goods may be measured through an image recognition technology. If the operation posture of the user holding the volume measuring apparatus is inaccurate, such as too far away from the target goods or too tilted with respect to the target goods, it may measure the data incorrectly.

US 2016/109220 A1 discloses a handheld dimensioning system that analyzes a depth map for null-data pixels to provide feedback is disclosed. Null-data pixels correspond to missing range data and having too many in a depth map may lead to dimensioning errors. Providing feedback based on the number of null-data pixels helps a user understand and adapt to different dimensioning conditions, promotes accuracy, and facilitates handheld applications.

EP 3 012 601 A1 discloses a ystem and method for obtaining a dimension measurement that conforms to a conformance criteria is disclosed. The dimensioning system provides either (i) feedback to confirm that the measurement complies with the criteria or (ii) information on how the measurement geometry could be adjusted in order to provide a compliant measurement in a subsequent dimension measurement.

US 2015/187091 A1 discloses a size measurement device for measuring a size of an object from a captured image of the object including: an imaging unit that captures an image of an object; a display unit that displays image data captured by the imaging unit; an input unit for inputting instructions of a user; a region setting unit that, when positions are designated with the input unit in the image data displayed on the display unit, sets surrounding regions including therein respective designated positions; and a feature point determination unit that determines, in the surrounding regions set by the region setting unit, feature points providing coordinates of the object to be measured.

US 2018/202797 A1 discloses a dimension measuring apparatus which measures dimensions of a measurement target object without the need of complicated operations by a user. According to dimension measuring apparatus (100), laser (15) radiates laser beams to form at least two feature points on a measurement target object. Decoder (20) measures a distance from the measurement target object by using reflection light of at least two laser beams reflected on the measurement target object. Imaging sensor (10A) captures an image of the measurement target object to which at least the two laser beams are radiated. Dimension measurement section (30) measures a length of the measurement target object on a line connecting the two feature points on the basis of the distance from the measurement target object, a position of the measurement target object in the image, and positions of the two feature points in the image.

US 2019/213389 A1 discloses a system and a method for computing dimensions of an object in a scene including: controlling, by a processor, a depth camera system to capture at least a frame of the scene, the frame including a color image and a depth image arranged in a plurality of pixels; detecting, by the processor, an object in the frame; determining, by the processor, a ground plane in the frame, the object resting on the ground plane; computing, by the processor, a rectangular outline bounding a projection of a plurality of pixels of the object onto the ground plane; computing, by the processor, a height of the object above the ground plane; and outputting, by the processor, computed dimensions of the object in accordance with a length and a width of the rectangular outline and the height.

As discussed, the related-art volume measuring apparatus may measure accurate data only when the user has well operation experiences and operation habits, so the volume measuring apparatus still needs to be improved.

### SUMMARY OF THE DISCLOSURE

The disclosure is directed to an alarming and measuring method for a volume measuring apparatus, which may determine whether a measure posture of the volume measuring apparatus with respect to a target box matches a measuring condition before a volume related data of the target box is computed, and send out an alarming signal when the measuring posture is determined to be not matched with the measuring condition.

In one embodiment, the alarming and measuring method of the present disclosure is incorporated with a volume measuring apparatus including a processor, a trigger button, a first camera, and a second camera, and the alarming and measuring method includes following steps: controlling the first camera and the second camera to respectively capture a left image and a right image when the trigger button is pressed; computing the left image and the right image by the processor to generate a depth graphic correspondingly;
scanning the depth graphic to first determine whether an entire image of a target box exists in the depth graphic; computing a capturing angle of the volume measuring apparatus with respect to the target box in accordance with multiple contour lines of the entire image of the target box in the depth graphic only when the entire image of the target box is in the depth graphic; determining whether the capturing angle matches a measuring condition; sending out an alarming signal when the target box does not exist or the capturing angle does not match a measuring condition; and, computing a volume related data of the target box in accordance with the multiple contour lines when the target box exists and the capturing angle matches the measuring condition.

The present disclosure sends out an alarming signal when a measuring posture of a volume measuring apparatus with respect to a target box does not match a measuring condition, and computes and outputs a volume related data of the target box based on obtained data when the measuring condition is matched. In comparison with related art, the technical solution of the present disclosure may improve the accuracy of the volume related data to be computed and ensure the computed volume related data to be within a tolerance scope.

### DESCRIPTION OF THE DRAWINGS

FIG. 1 is a schematic diagram of a volume measuring apparatus of a first embodiment according to the present disclosure.
FIG. 2 is a block diagram of the volume measuring apparatus of a first embodiment according to the present disclosure.
FIG. 3 is a schematic diagram showing a using status of the volume measuring apparatus of a first embodiment according to the present disclosure.
FIG. 4A is a first alarming flowchart of a first embodiment according to the present disclosure.
FIG. 4B is a second alarming flowchart of the first embodiment according to the present disclosure.
FIG. 5 is a schematic diagram showing a field-of-view determination of a first embodiment according to the present disclosure.
FIG. 6 is a flowchart for field-of-view determination of a first embodiment according to the present disclosure.
FIG. 7 is a schematic diagram showing an angle determination of a first embodiment according to the present disclosure.
FIG. 8 is a schematic diagram showing an angle determination of a second embodiment according to the present disclosure.
FIG. 9 is a schematic diagram showing an angle determination of a third embodiment according to the present disclosure.
FIG. 10 is a flowchart for angle determination of a first embodiment according to the present disclosure.

### DETAILED DISCRIPTION OF THE DISCLOSURE

In cooperation with the attached drawings, the technical contents and detailed description of the present disclosure are described hereinafter according to multiple embodiments, being not used to limit its executing scope. The invention is defined in the appended claims.

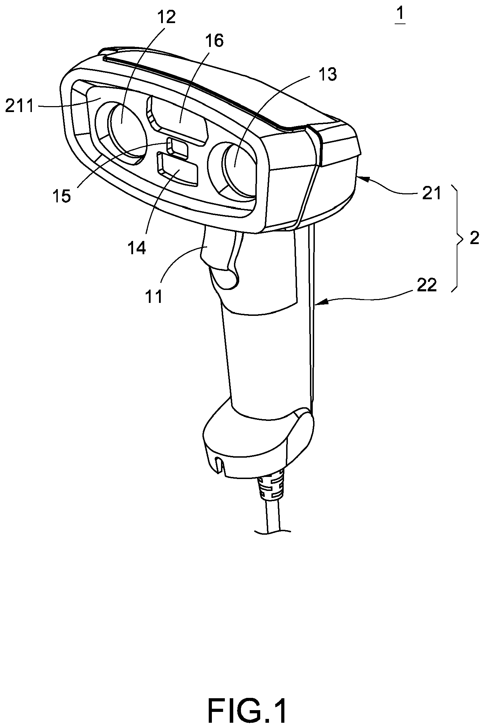

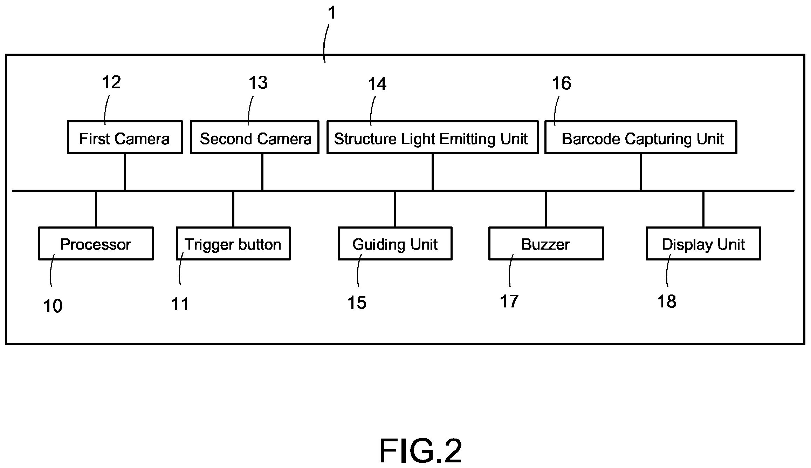

Please refer to FIG. 1 and FIG. 2, FIG. 1 is a schematic diagram of a volume measuring apparatus of a first embodiment according to the present disclosure, FIG. 2 is a block diagram of the volume measuring apparatus of a first embodiment according to the present disclosure.

The present disclosure discloses an alarming and measuring method for volume measuring apparatus (referred to as the alarming method hereinafter), the alarming method is incorporated with a volume measuring apparatus 1 as shown in FIG. 1 and FIG. 2, and is used to send out an alarm when the volume measuring apparatus 1 performs a measuring action. By way of the alarming method, the volume measuring apparatus 1 may perform the measuring action when a measuring posture of the volume measuring apparatus 1 at the very time matches a preset measuring condition, and send out an alarm when the measuring posture of the volume measuring apparatus 1 at the very time does not match the measuring condition. Therefore, the accuracy of a volume related data measured by the volume measuring apparatus 1 may be improved, and the correctness of the measured volume related data may be ensured to be within an acceptable tolerance scope.

In particular, the volume measuring apparatus 1 may optionally measure a volume related data (such as width, height, length, etc.) of a box, or scan a barcode to obtain a content of the barcode. In order to secure the accuracy of the data obtained by the volume measuring apparatus 1 (especially the volume related data), the alarming method of the present disclosure monitors a measuring posture of the volume measuring apparatus 1 when the measuring action and/or the scanning action is performed. Therefore, the alarming method sends out an alarm when the measuring posture does not match a measuring condition (i.e., may affect the accuracy of the measuring action/scanning action), and also restricts the volume measuring apparatus 1 from performing the measuring action and/or scanning action when the measuring posture does not match the measuring condition.

The volume measuring apparatus 1 of the present disclosure may be used to measure a volume of a rectangular box. As shown in FIG. 1, the volume measuring apparatus 1 includes a body 2, the body 2 at least includes a working part 21, and a holding part 22 extended from a bottom face of the working part 21. Components for the measuring action and the scanning action are arranged in the working part 21. The holding part 22 is used for the user to hold by a hand.

As shown in FIG. 2, the volume measuring apparatus 1 at least includes a processor 10, a trigger button 11, a first camera 12, and a second camera 13 in the body 2, wherein the trigger button 11, the first cammera 12, and the second camera 13 are electrically connected with the processor 10. As shown in FIG. 1, the trigger button 11 is arranged on one side of the holding part 22, and exposed from the body 2 for the user to press. The first camera 12 and the second camera 13 are arranged in the working part 21, and collectively exposed from a front face 211 of the working part 21 to capture external images for the volume measuring apparatus 1.

The volume measuring apparatus 1 in the present disclosure is a hand-held volume measuring apparatus. When the user holds the volume measuring apparatus 1 by one hand, the user may use the palm to hold the holding part 22, and press the trigger button 11 by the index finger. When the trigger button 11 is pressed, the processor 10 controls the first camera 12 and the second camera 13 to capture images. In the embodiment as shown in FIG. 1, the trigger button 11 may be a mechanical button. In another embodiment, the trigger button 11 may be a touch button such as a capacitive touch button or a resistive touch button. Also, the trigger button 11 may be optionally arranged on the working part 21, not limited to the disclosure shown in FIG. 1.

The processor 10 performs a volume measuring program according to the images captured by the first camera 12 and the second camera 13 to compute a volume of an external box. More specific, the first camera 12 and the second camera 13 may respectively capture an image of the same box from different field of view (FoV), and the processor 10 may compute the two images through the volume measuring program to obtain a volume related data of the box.

The volume measuring apparatus 1 may optionally arrange a barcode capturing unit 16, the barcode capturing unit 16 is electrically connected with the processor 10. As shown in FIG. 1, the barcode capturing unit 16 is arranged in the working part 21, and exposed from the front face 211 of the working part 21 of the body 2. When the trigger button 11 is pressed, the processor 10 may control the barcode capturing unit 16 to scan an image of an external barcode for the volume measuring apparatus 1. The barcode capturing unit 16 may be a photographic lens, or a combination of a light emitter and a light sensor, but not limited thereto. The processor 10 may perform a barcode decoding program according to the image captured by the barcode capturing unit to decrypt a content of the barcode.

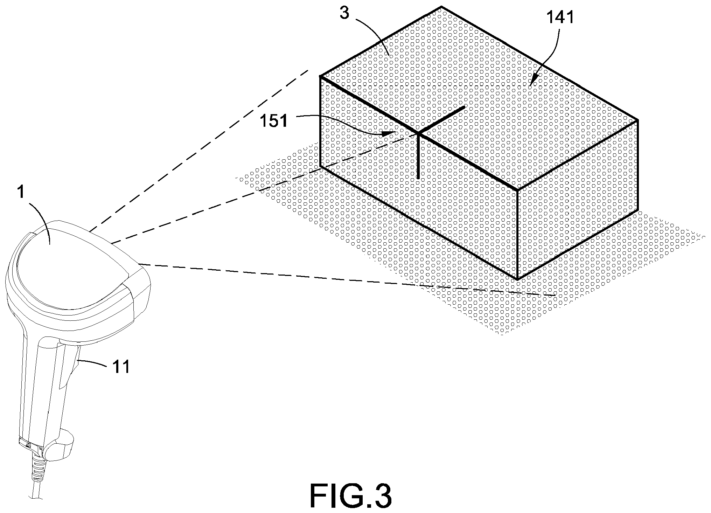

The processor 10 at least stores the aforementioned volume measuring program (now shown). The volume measuring program is executed to compute the images captured by the first camera 12 and the second camera 13 to determine whether a target box exists in the images. When the target box (such as the target box 3 shown in FIG. 3) exists in the images, the volume measuring program computes a volume related data, such as width, height, depth, etc., of the target box 3.

Please refer to FIG. 3, which is a schematic diagram showing a using status of the volume measuring apparatus of a first embodiment according to the present disclosure. When measuring a volume of a target box 3, the user may hold the volume measuring apparatus 1 to aim at the target box 3, and then press the trigger button 11 to trigger the processor 10 to perform a volume measuring function. More specific, when the trigger button 11 is pressed, the processor 10 controls the first camera 12 to capture a left image from a first field of view, and controls the second camera 13 to capture a right image from a second field of view. If the measuring posture of the volume measuring apparatus 1 at the very time is appropriate (i.e., parameters such as a distance and an angle of the volume measuring apparatus 1 with respect to the target box 3 are correct), the entire image of the target box 3 may be included in the left image and the right image respectively. Therefore, the processor 10 may compute the volume related data of the target box 3 in accordance with the left image and the right image captured at the very time.

More specific, after obtaining the left image and the right image, the processor 10 computes the left image and the right image through a depth transformation algorithm to generate a depth graphic. The depth graphic includes characteristic points simultaneously exist in the left image and the right image, and includes depth information of each of the characteristic points. In the present disclosure, the processor 10 uses the depth graphic to be a computation foundation of the volume measuring program, so as to compute the volume related data of the target box 3 included in the depth graphic (detailed described in the following).

As shown in FIG. 1, FIG. 2, and FIG. 3, the volume measuring apparatus 1 may include a structure light emitting unit 14 electrically connected with the processor 10. The structure light emitting unit 14 is arranged in the working part 21, and exposed from the front face 211 of the working part 21 of the body 2.

When the trigger button 11 is pressed, the processor 10 may activate the structure light emitting unit 14 at the same time to emit an invisible structure light, and the invisible structure light may form one or multiple reference patterns 141 as shown in FIG. 3 in an imaging range of the first camera 12 and the second camera 13. In one embodiment, when the volume measuring program is executed, the processor 10 computes the reference patterns 141 in the left image and the right image to generate the depth graphic as the computation foundation of the volume measuring program.

In particular, the reference pattern 141 is formed by multiple elements such as identifiable points, shapes, graphics, texts, symbols, etc., FIG. 3 is illustrated by multiple identifiable points, but not limited thereto. When the depth graphic is generated, the processor 10 searches for identical elements in the left image and the right image, and finds the location difference of each element in the left image and in the right image, and computes depth information of each characteristic point corresponding to each element according to the location difference, and generates the depth graphic according to the depth information.

As shown in FIG. 1, FIG. 2, and FIG. 3, the volume measuring apparatus 1 may include a guiding unit 15 electrically connected with the processor 10. The guiding unit 15 is arranged in the working part 21, and exposed from the front face 211 of the working part 21 of the body 2. When the trigger button 11 is pressed, the processor 10 may activate the guiding unit 15 to emit a laser beam. The user may operate the volume measuring apparatus 1 to aim at the target box 3 through the guidance of the laser beam, so as to place the target box 3 in the imaging range of the first camera 12 and the second camera 13. Therefore, the first camera 12 and the second camera 13 may obtain the left image and the right image for the processor 10 to process effectively.

As shown in FIG. 3, the guiding unit 15 may emit the laser beam after being activated, and a guiding object 151 may be formed by the laser beam in a cross manner. When the measuring action is performed, the user may use the guiding object 151 to aim at the target box 3 to be measured, so as to make the first camera 12 and the second camera 13 to respectively capture an effective left image and an effective right image.

It is worth saying that, the manufacturer of the volume measuring apparatus 1 may set the parameters of the volume measuring apparatus 1 in a manufacturing stage to correlate the parameters of the first camera 12 and the second camera 13, such as the focal distance, the field of view, the resolution, etc., with the size and shape of the guiding object 151. For example, the volume measuring apparatus 1 may be set to determine that a measuring posture of the volume measuring apparatus 1 with respect to the target box 3 matches a preset measuring condition when the user holds the volume measuring apparatus 1 to move and make the guiding object 151 emitted from the guiding unit 15 to aim at a center of the target box 3, and to adjust the distance and the angle of the volume measuring apparatus 1 with respect to the target box 3 for the guiding object 151 to present a specific size and shape on the target box 3. When the measuring posture is determined to be matched with the measuring condition, the processor 10 is controlled to compute and output the volume related data of the target box 3.

On the contrary, when the measuring posture of the volume measuring apparatus 1 with respect to the target box 3 does not match the preset measuring condition, the volume measuring apparatus 1 keeps sending out an alarming signal, and the processor 10 is restricted from computing and outputting the volume related data of the target box 3. Therefore, an error or inaccurate volume related data due to the improper operation of the user may be prevented.

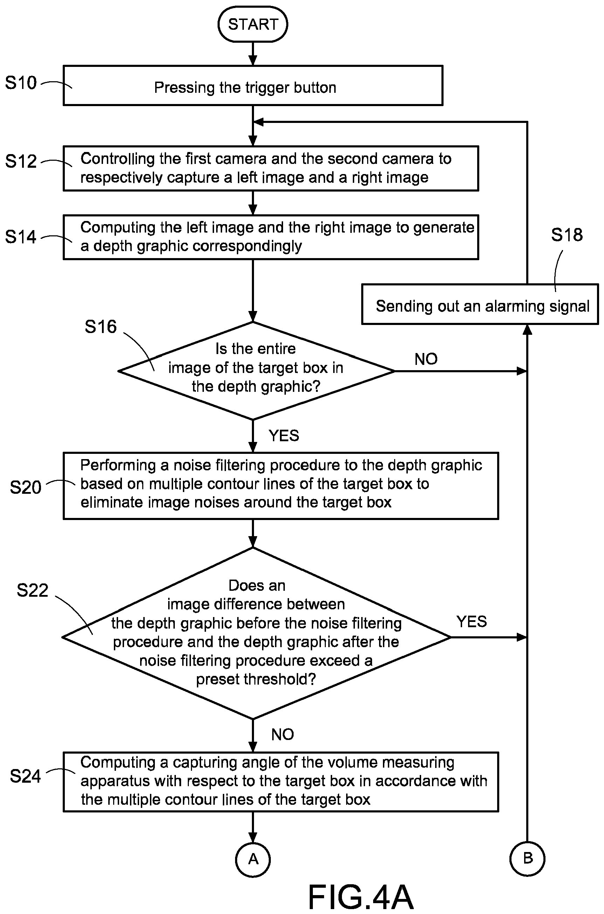

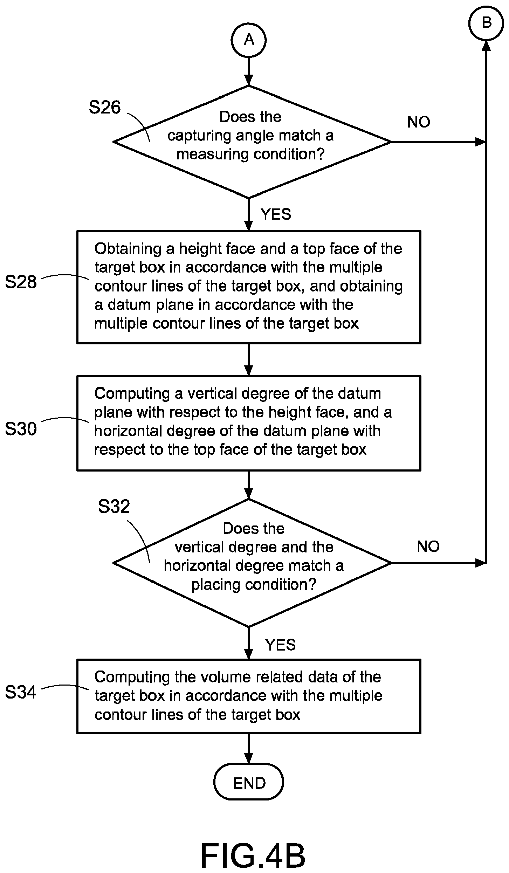

Please refer to FIG. 4A and FIG. 4B, FIG. 4A is a first alarming flowchart of a first embodiment according to the present disclosure, FIG. 4B is a second alarming flowchart of the first embodiment according to the present disclosure. FIG. 4A and FIG. 4B are used to disclose each execution step of the alarming method of the present disclosure.

First, the user may hold the volume measuring apparatus 1 and press the trigger button 11 on the volume measuring apparatus 1 (step S10). The trigger button 11 is pressed because the user wants to perform a volume measuring action through the volume measuring apparatus 1, so the processor 10 controls the first camera 12 and the second camera 13 to respectively capture a left image and a right image (step S12).

It should be mentioned that, if the volume measuring apparatus 1 includes the aforementioned structure light emitting unit 14, in the step S12, the processor 10 may simultaneously control the structure light emitting unit 14 to emit the invisible structure light to form the reference pattern 141 within the imaging range of the first camera 12 and the second camera 13. In this embodiment, the left image captured by the first camera 12 and the right image captured by the second camera 13 at least include the image of the reference pattern 141.

If the volume measuring apparatus 1 includes the aforementioned guiding unit 15, in the step S12, the processor 10 may simultaneously control the guiding unit 15 to emit the laser beam to form the guiding object 151. The guiding object 151 may assist the user to operate the volume measuring apparatus 1 to aim at the target box 3, so as to make the measuring posture of the volume measuring apparatus 1 match with the preset measuring condition.

After obtaining the left image and the right image, the processor 10 computes the left image and the right image through the volume measuring program to generate a depth graphic correspondingly (step S14), wherein the depth graphic includes depth information of multiple characteristic points, such as ground, desktop, wall, the target box 3, and other objects, correctively exist in the left image and the right image.

It should be mentioned that, if the volume measuring apparatus 1 includes the structure light emitting unit 14, the left image and the right image at least include the aforementioned reference pattern 141, and the processor 10 may perform computation based on the reference pattern 141 in the left image and the right image to generate the depth graphic in the step S14. In the embodiment, the elements as the computation foundation in the left image and the right image are increased due to the reference pattern 141, so the depth information in the depth graphic generated by the processor 10 are more accurate than the depth information in another depth graphic generated by the processor 10 without using the structure light emitting unit 14. However, the above description is only one of the exemplary embodiments of the present disclosure, not limited thereto.

After the depth graphic is generated, the processor 10 scans the depth graphic to determine whether an entire image of the target box 3 exists in the depth graphic (step S16). In other words, the processor 10 pre-determines whether an object similar to a rectangular box is within the imaging scope of the first camera 12 and the second camera 13 in the step S16.

In particular, in the step S16, the processor 10 may generate multiple virtual scanning lines (including multiple virtual vertical scanning lines and multiple virtual horizontal scanning lines) through the volume measuring program, and scan the depth graphic through the multiple virtual scanning lines to obtain multiple contour lines of the target box (if exists) from the depth graphic. After the multiple contour lines from the depth graphic are successfully obtained, the processor 10 determines that the target box 3 to be measured is in the depth graphic. Otherwise, the processor 10 determines that no target box 3 is in the depth graphic when the multiple contour lines cannot be successfully obtained from the depth graphic.

When the aforementioned scanning action is performed, the processor 10 generates the multiple virtual vertical scanning lines and the multiple horizontal scanning lines in an order, gathers statistics of the depth information of each point in the depth graphic through the scanning lines, and forms the contour lines according to depth differences of each adjacent point. For example, the depth information of multiple adjacent points (points adjacent to the left and the right, and points adjacent to the top and the bottom) on same contour line are approximate to each other. Besides, the processor 10 determines that the target box 3 does not exist in the depth graphic when multiple adjacent points having approximate depth information cannot be obtained and multiple contour lines cannot be formed. However, the above description is only one of the exemplary embodiments of the present disclosure, but not limited thereto.

If the processor 10 determines that the entire image of the target box 3 does not exist in the depth graphic in the step S16, the processor 10 does not perform the volume measuring action, and the processor 10 abandons the left image, the right image, and the depth graphic obtained at the very time, and controls the volume measuring apparatus 1 to send out a corresponding alarming signal (step S18).

As shown in FIG. 2, the volume measuring apparatus 1 may include a buzzer 17 electrically connected with the processor 10. In the step S18, the processor 10 may control the buzzer 17 to send out the alarming signal in a sound manner. By using the alarming signal, the user may know that the measuring posture of the volume measuring apparatus 1 is inappropriate at the very time, such as failing to aim at the target box 3, too far away from the target box 3, too close to the target box 3, too tilted with respect to the target box 3, etc., and have to adjust the measuring posture of the volume measuring apparatus 1 to perform the measuring action.

As shown in FIG. 2, the volume measuring apparatus 1 may include a display unit 18 electrically connected with the processor 10. In the step S 18, the processor 10 may control the display unit 18 to send out the alarming signal in a light manner. In one embodiment, the display unit 18 may be a light emitting diode (LED). In another embodiment, the display unit 18 may be a liquid crystal display (LCD), but not limited thereto.

The step S16 is performed to determine whether the target box 3 to be measured is in the images captured by the first camera 12 and the second camera 13, and to determine whether the distance between the volume measuring apparatus 1 and the target box 3 at the very time is appropriate. If the processor 10 determines that the entire image of the target box 3 to be measured is in the depth graphic and the distance between the volume measuring apparatus 1 and the target box 3 is appropriate in the step S 16, the processor 10 may then perform a determination procedure for a next measuring posture.

In one embodiment, the processor 10 may optionally perform an image re-process to the depth graphic to make the following determination procedure more accurate.

In particular, if the determination result of the step S16 is yes, it means the processor 10 confirms that the entire image of the target box 3 is in the depth graphic, and obtains the multiple contour lines of the target box 3 through the scanning action. In this scenario, the processor 10 performs a noise filtering procedure based on the obtained multiple contour lines, so as to eliminate image noises around the target box 3 (including the noises on a left side, a right side, and a back side of the target box 3) (step S20).

In one embodiment, the processor 10 may determine whether an image difference between the depth graphic before the noise filtering procedure and the depth graphic after the noise filtering procedure exceeds a preset threshold (step S22). If the image difference between the depth graphic before the noise filtering procedure and the depth graphic after the noise filtering procedure exceeds the threshold, it means that the position of the target box 3 is inappropriate, or the images captured by the first camera 12 and the second camera 13 are not good. In this scenario, the processor 10 abandons the left image, the right image, and the depth graphic obtained at the very time, and sends out the alarming signal through the buzzer 17 and/or the display unit 18 (step S18).

If the image difference between the depth graphic before the noise filtering procedure and the depth graphic after the noise filtering procedure does not exceed the threshold, the processor 10 may perform a determination procedure for the next measuring posture.

It should be mentioned that the step S20 and the step S22 may be optionally performed by the processor 10.

If the determination result of the step S16 is yes, it means that the entire image of the target box 3 is confirmed, by the processor 10, to be in the depth graphic, and the processor 10 obtains the multiple contour lines of the target box 3 through the scanning action. In this scenario, the processor 10 computes a capturing angle of the volume measuring apparatus 1 with respect to the target box 3 in accordance with the multiple contour lines of the target box 3 (step S24), and the processor 10 determines whether the capturing angle matches a preset measuring condition (step S26). In particular, in the step S24, the processor 10 uses a tilted angle of each of the multiple contour lines on the depth graphic as a computation foundation, so as to compute the capturing angle of the volume measuring apparatus 1 with respect to the target box 3.

In one embodiment, the processor 10 determines that the capturing angle at the very time matches the preset measuring condition when a pitch angle of the volume measuring apparatus 1 with respect to the target box 3 is within 35 degree to 65 degree. In another embodiment, the processor 10 determines that the capturing angle at the very time matches the preset measuring condition when a skew angle of the volume measuring apparatus 1 with respect to the target box 3 is within -15 degree to +15 degree. In another embodiment, the processor 10 determines that the capturing angle at the very time matches the preset measuring condition when a roll angle of the volume measuring apparatus 1 with respect to the target box 3 is within -15 degree to +15 degree. However, the above descriptions are only few embodiments of the present disclosure, but not limited thereto.

If the processor 10 determines that the capturing angle of the volume measuring apparatus 1 with respect to the target box 3 does not match the measuring condition in the step S26, the processor 10 abandons the left image, the right image, and the depth graphic obtained at the very time, and sends out a corresponding alarming signal through the buzzer 17 and/or the display unit 18 (step S18). Otherwise, if the processor 10 determines that the capturing angle of the volume measuring apparatus 1 with respect to the target box 3 matches the the measuring condition in the step S26, the processor 10 may compute the volume related data of the target box 3 in accordance with the multiple contour lines.

In general, the target box 3 may be placed on the ground (or the desktop) to be measured by the volume measuring apparatus 1. It should be mentioned that the volume measuring program executed by the processor 10 may use the information of the ground (or the desktop) as one of the computation reference (detailed described in the following), so as to increase the accuracy of the computed volume related data (especially the volume related data of an object with irregular shapes). As a result, in the alarming method of the present disclosure, the processor 10 may optionally perform a confirmation action for a placed status of the target box 3 at the very time before computing the volume related data of the target box 3.

As shown in FIG. 4B, after the step S26, the processor 10 obtains a height face and a top face of the target box 3 with respect to the volume measuring apparatus 1 in accordance with the multiple contour lines, and obtains a datum plane for placing the target box 3 in accordance with the multiple contour lines (step S28).

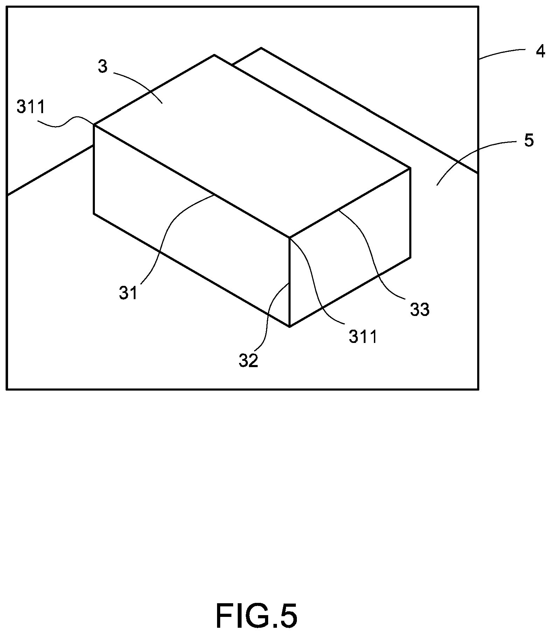

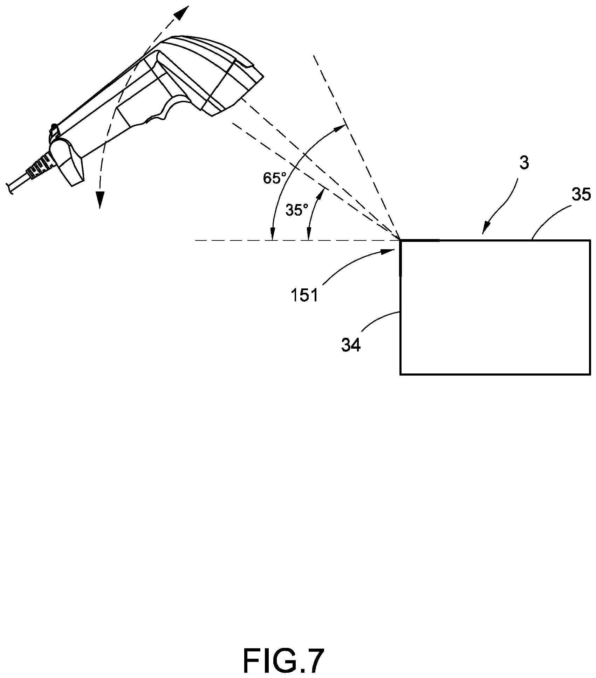

In one embodiment, the processor 10 takes a plane adj acent to a lowest edge of the target box 3 in the depth graphic as the datum plane (such as a ground 5 as shown in FIG. 5). The processor 10 takes a plane that is made of multiple contour lines and closest to the first camera 12 and the second camera 13 (i.e., having a shallowest average depth) as the height face (such as a height face 34 as shown in FIG. 7). The processor 10 takes a plane that is made of multiple contour lines, including one contour line identical to the height face (such as a long edge 31 as shown in FIG. 5) and on the top of the height face, as the top face (such as a top face 35 as shown in FIG. 7). However, the above description is only one embodiment of the present disclosure, but not limited thereto.

After the step S28, the processor 10 computes a vertical degree (i.e., whether an angle is approximate to vertical) of the datum plane with respect to the height face of the target box 3, and computes a horizontal degree (i.e., whether an angle is approximate to horizontal) of the datum plane with respect to the top face of the target box 3 (step S30), and the processor 10 determines whether the vertical degree and the horizontal degree are respectively matched with a preset placing condition (step S32).

As disclosed above, the volume measuring program executed by the processor 10 may use the datum plane as one of the computation parameters during the computing of the volume, if the vertical degree and/or the horizontal degree does not match the placing condition (i.e., the target box 3 is placed inappropriate), it may cause deviation to the computed volume related data. As a result, if the vertical degree and/or the horizontal degree determined in the step S32 does not match the placing condition, the processor 10 may abandon the left image, the right image, and the depth graphic obtained at the very time, and send out a corresponding alarming signal through the buzzer 17 or the display unit 18 (step S18) instead of directly computing the volume of the target box 3.

On the contrary, if the vertical degree and the horizontal degree are determined to be matched with the preset placing condition in the step S32 (for example, the height face 34 is perpendicular to the datum plane, and the top face 35 is parallel to the datum plane), the processor 10 directly computes the volume related data of the target box 3 in accordance with the obtained multiple contour lines (step S34).

In the embodiment of FIG. 4A and FIG. 4B, the processor 10 may execute the step S34 to compute and output the volume related data of the target box 3 only when the processor 10 determines that the entire image of the target box 3 is in the depth graphic in the step S 16, determines that the image difference between the depth graphic before the noise filtering procedure and the depth graphic after the noise filtering procedure is not greater than the threshold in the step S22, determines that the capturing angle of the volume measuring apparatus 1 with respect to the target box 3 matches the measuring condition in the step S26, and determines that the target box 3 is placed appropriate and matches the preset placing condition in the step S32. If any determination condition in the step S16, the step S22, the step S26, and the step S32 is not matched, the processor 10 executes the step S18 to send out a corresponding alarming signal and does not to compute and output the volume related data.

It should be mentioned that, in one embodiment, the processor 10 obtains the multiple contour lines (such as a long edge 31, a height edge 32, a depth edge 33, etc. as shown in FIG. 5), uses the multiple contour lines as a execution range of a second scanning action, scans the inside of the target box 3 made of the multiple contour lines through multiple virtual scanning lines (including multiple virtual vertical scanning lines and multiple virtual horizontal scanning lines), and obtains multiple length information, multiple height information, and multiple depth information based on a scanning result of the second scanning action.

According to the multiple length information, the multiple height information, and the multiple depth information, the processor 10 may compute the volume related data including an actual length, an actual height, and an actual depth of the target box 3. For example, the processor 10 may compute a first average of the multiple length information to be the actual length of the target box 3, compute a second average of the multiple height information to be the actual height of the target box 3, and compute a third average of the multiple depth information to be the actual depth of the target box 3. However, the above description is only one embodiment of the present disclosure, not limited thereto.

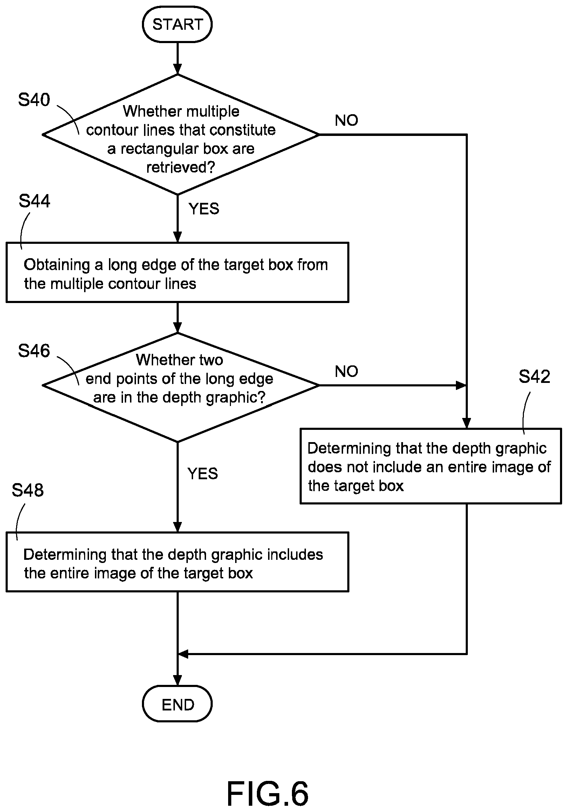

Please refer to FIG. 5 and FIG. 6, FIG. 5 is a schematic diagram showing a field-of-view determination of a first embodiment according to the present disclosure, FIG. 6 is a flowchart for field-of-view determination of a first embodiment according to the present disclosure. FIG. 6 is used to detailed describe the step S16 in the flowchart of FIG. 4A.

After the step S14 of FIG. 4A, the processor 10 may obtain a depth graphic 4 generated based on the left image and the right image captured by the first camera 12 and the second camera 13, wherein the depth graphic 4 records location coordinates and depth information of multiple characteristic points that collectively exist in the left image and the right image. In this embodiment, the processor 10 performs the depth scan to the depth graphic 4 through multiple virtual vertical scanning lines and multiple virtual horizontal scanning lines (not shown), so as to determine whether multiple contour lines that constitute a rectangular box may be retrieved from the depth graphic 4 (step S40). In one embodiment, multiple adjacent points (including points adjacent to the left and the right, and points adjacent to the top and the bottom) on the same contour line may have the same or similar depth information.

For example, the processor 10 may scan the depth graphic 4 in a vertical direction through the multiple virtual vertical scanning lines, and constitute one contour line (such as the long edge 31 shown in FIG. 5) by multiple points which are continuous, adjacent to the left and the right, and with the same or similar depth information.

For another example, the processor 10 may scan the depth graphic 4 in a horizontal direction through the multiple virtual horizontal scanning lines, and constitute one contour line (such as the height edge 32 and the depth edge 33 shown in FIG. 5) by multiple points which are continuous, adjacent to the top and the bottom, and with the same or similar depth information.

If the processor 10 determines that the multiple contour lines cannot be retrieved in the step S40, the processor 10 abandons the left image, the right image, and the depth graphic 4 obtained at the very time, and determines that the depth graphic 4 does not include an entire image of the target box 3 to be measured (step S42). In this scenario, the target box 3 may not be placed within the field of view of the first camera 12 and the second camera 13, or the user may not properly operate the volume measuring apparatus 1 to aim at the target box 3 and cause only a part of the target box 3 to be located within the field of view of the first camera 12 and the second camera 13.

If the processor 10 determines that the multiple contour lines are retrieved in the step S40, the processor 10 obtains a long edge 31 of the target box 3 from the multiple contour lines (step S44). In one embodiment, the long edge 31 is one contour line of the multiple contour lines of the target box 3 that is horizontal and closest to the volume measuring apparatus 1.

Next, the processor 10 determines whether two end points 311 of the long edge 31 are in the depth graphic 4 (step S46). If any of the two end points 311 of the long edge 31 does not exist in the depth graphic 4, it means that the volume measuring apparatus 1 does not aim at the target box 3, or the distance between the volume measuring apparatus 1 and the target box 3 is too close. In this scenario, the processor 10 abandons the left image, the right image, and the depth graphic 4 obtained at the very time, and determines that the depth graphic 4 does not include the entire image of the target box 3 (step S42).

On the other hand, if the two end points 311 of the long edge 31 are in the depth graphic 4, it means that that the distance between the volume measuring apparatus 1 and the target box 3 is appropriate, and the processor 10 determines that the depth graphic 4 includes the entire image of the target box 3 (step S48).

In particular, the target box 3 is a three-dimensional object. As shown in FIG. 5, the depth information of each of the end points 311 may have a huge depth difference comparing to the depth information of at least one point adjacent to the end point 311 (such as a point on the ground 5). Therefore, the processor 10 may search for the depth difference to determine whether a point is the end point 311 of the long edge 31. However, the above description is only one embodiment of the present disclosure, but not limited thereto.

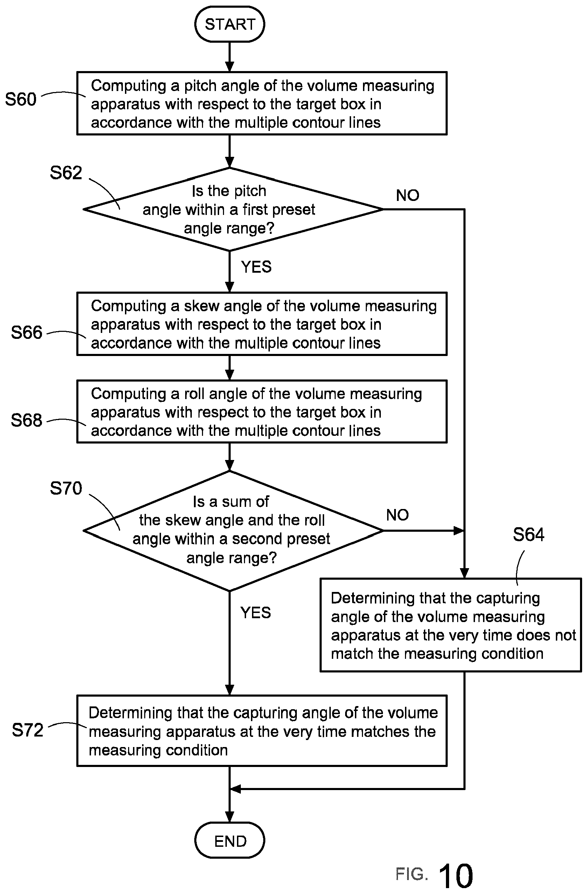

Please refer to FIG. 7, FIG. 8, FIG. 9, and FIG. 10 at the same time, wherein FIG. 7 to FIG. 9 are three embodiments of a schematic diagram showing an angle determination, FIG. 10 is a flowchart for angle determination of a first embodiment according to the present disclosure. FIG. 10 is used to detailed describe the step S24 of FIG. 4A and the step S26 of FIG. 4B.

As shown in FIG. 10, after the multiple contour lines from the depth graphic 4 are obtained, the processor 10 first computes a pitch angle of the volume measuring apparatus 1 with respect to the target box 3 in accordance with the multiple contour lines (step S60), and determines whether the pitch angle is within a first preset angle range (step S62).

In particular, as shown in FIG. 7, the processor 10 takes the height face 34 of the target box 3 as a measuring foundation, and takes a direction perpendicular to the height face 34 as 0 degree. In one embodiment, the first preset angle range may be set within 35 degree to 65 degree, but not limited thereto.

When the user holds the volume measuring apparatus 1, the user may operate the volume measuring apparatus 1 to aim at the long edge 31 of the target box 3 through the guiding object 151 emitted from the guiding unit 15, and adjust the height of the volume measuring apparatus 1 along a vertical direction. The processor 10 may obtain the information of the multiple contour lines, such as shapes, tilt rate, etc. of the height face 34 of the target box 3 from the depth graphic 4, and compute the pitch angle of the volume measuring apparatus 1 with respect to the target box 3 (especially the height face 34 of the target box 3) based on the information. When the pitch angle is within 35 degree to 65 degree, the processor 10 determines that the pitch angle of the volume measuring apparatus 1 with respect to the target box 3 at the very time is within the first preset angle range.

If the processor 10 determines that the pitch angle of the volume measuring apparatus 1 with respect to the target box 3 is not within the first preset angle range in the step S62, It means the position of the volume measuring apparatus 1 is too high or too low, and may cause deviation to the volume related data after computation. As a result, the processor 10 abandons the left image, the right image, and the depth graphic 4 obtained at the very time, determines that the capturing angle at the very time does not match the measuring condition (step S64), and does not proceed to compute the volume.

On the other hand, if the processor 10 determines that the pitch angle of the volume measuring apparatus 1 with respect to the target box 3 is within the first preset angle range in the step S62, it means the height of the volume measuring apparatus 1 with respect to the target box 3 is appropriate, and the processor 10 may proceed to perform next angle determination action.

In particular, when the pitch angle of the volume measuring apparatus 1 with respect to the target box 3 is determined to be within the first preset angle range in the step S62, the processor 10 computes a skew angle of the volume measuring apparatus 1 with respect to the target box 3 in accordance with the multiple contour lines (step S66), and computes a roll angle of the volume measuring apparatus 1 with respect to the target box 3 in accordance with the multiple contour lines at the same time (step S68).

After the skew angle and the roll angle are obtained, the processor 10 computes a sum of the skew angle and the roll angle, and determines whether the sum is within a second preset angle range (step S70).

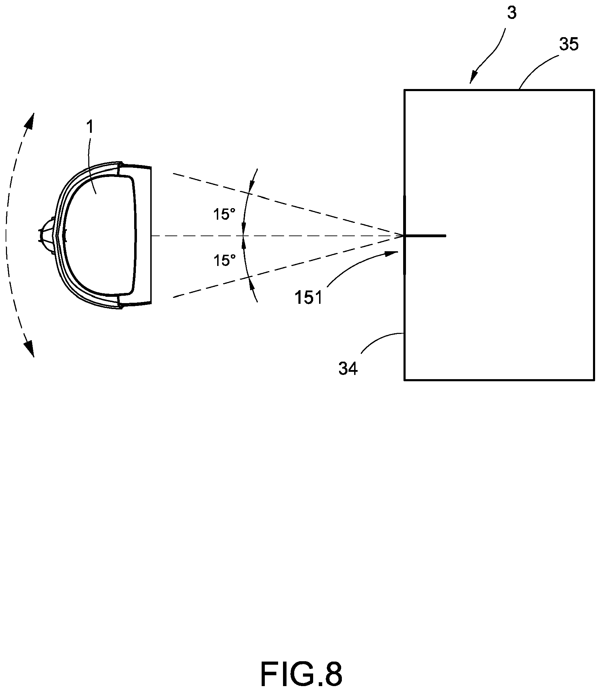

In particular, as shown in FIG. 8, the processor 10 takes the height face 34 of the target box 3 as a measuring foundation, and takes a direction perpendicular to the height face 34 as 0 degree. When the user holds the volume measuring apparatus 1, the user may operate the volume measuring apparatus 1 to aim at the long edge 31 of the target box 3 through the guiding object 151 emitted from the guiding unit 15, and adjust the horizontal position of the volume measuring apparatus 1 with respect to the target box 3. The processor 10 may obtain the information of the multiple contour lines, such as shapes, tilt rate, etc. of the height face 34 of the target box 3 from the depth graphic 4, and compute the skew angle of the volume measuring apparatus 1 with respect to the target box 3 (especially the height face 34 of the target box 3) based on the information.

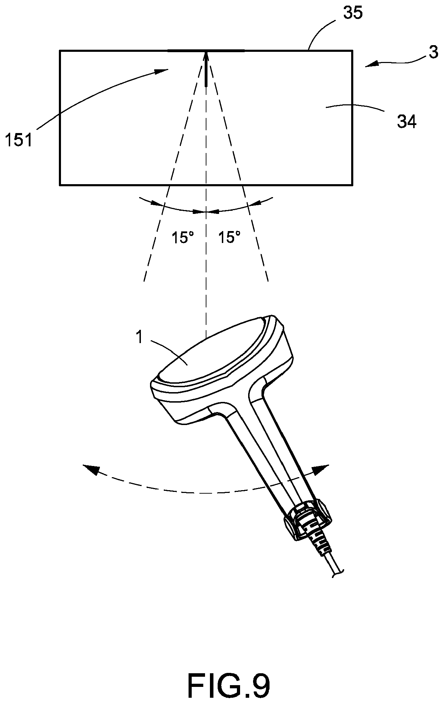

As shown in FIG. 9, when the volume measuring apparatus 1 is aimed at the long edge 31 of the target box 3 through the guiding object 151, the user may rotate the volume measuring apparatus 1. The processor 10 may obtain the information of the multiple contour lines, such as shapes, tilt rate, etc. of the height face 34 of the target box 3 from the depth graphic 4, and compute the roll angle of the volume measuring apparatus 1 with respect to the target box 3 (especially the height face 34 of the target box 3) based on the information.

In one embodiment, the second preset angle range may be set within -15 degree to +15 degree, but not limited thereto. If the processor 10 determines that the sum of the skew angle and the roll angle is not within the second preset angle range in the step S70, it means that the position of the volume measuring apparatus 1 with respect to the target box 3 at the very time is too leftward, too rightward, or rotated too much, and may cause deviation to the volume related data after computation. In this scenario, the processor 10 abandons the left image, the right image, and the depth graphic 4 obtained at the very time, and determines that the capturing angle of the volume measuring apparatus 1 with respect to the target box 3 does not match the measuring condition (step S64), and does not proceed to compute the volume.

On the contrary, if the processor 10 determines that the sum of the skew angle and the roll angle is within the second preset angle range in the step S70, it means that the position of the volume measuring apparatus 1 with respect to the target box 3 at the very time is appropriate, so the processor 10 may determine that the capturing angle of the volume measuring apparatus 1 at the very time matches the measuring condition (step S72). In other words, in the step S26 of FIG. 4B, the processor 10 determines that the capturing angle of the volume measuring apparatus 1 with respect to the target box 3 matches the measuring condition when the pitch angle of the volume measuring apparatus 1 with respect to the target box 3 is within the first preset angle range (such as 35 degree to 65 degree), and the sum of the skew angle and the roll angle of the volume measuring apparatus 1 with respect to the target box 3 is within the second preset angle range (such as -15 degree to +15 degree).

By using the technical solution of the present disclosure, when the user operates the volume measuring apparatus 1 to measure a target box 3, the measuring posture of the volume measuring apparatus 1 with respect to the target box 3 needs to match a preset measuring condition for the volume measuring apparatus 1 to obtain the volume related data of the target box 3, otherwise the volume measuring apparatus 1 may continuously send out an alarming signal to ask the user to adjust the measuring posture. As a result, the accuracy of the volume related data measured by the volume measuring apparatus 1 may be effectively improved, and the accuracy of the volume related data may be secured in an acceptable tolerance scope.

## Claims

1. An alarming and measuring method for a volume measuring apparatus (1), the volume measuring apparatus (1) at least comprising a processor (10), a trigger button (11), a first camera (12), and a second camera (13), the trigger button (11), the first camera (12), and the second camera (13) electrically connected with the processor (10), the alarming and measuring method comprising:
a) controlling the first camera (12) and the second camera (13) to respectively capture a left image and a right image when the trigger button (11) is pressed;
b) computing the left image and the right image by the processor (10) to generate a depth graphic (4) correspondingly, wherein the depth graphic (4) at least comprises a depth information of multiple characteristic points collectively exist in the left image and the right image;
c) scanning the depth graphic (4) to first determine whether an entire image of a target box (3) is in the depth graphic (4);
d) computing a capturing angle of the volume measuring apparatus (1) with respect to the target box (3) in accordance with multiple contour lines of the entire image of the target box (3) in the depth graphic (4) only when the entire image of the target box (3) is in the depth graphic (4);
e) determining whether the capturing angle matches a measuring condition;
f) sending out an alarming signal when the entire image of the target box (3) is inexistent in the depth graphic (4) or the capturing angle is unmatched with the measuring condition; and
g) computing a volume related data of the target box (3) in accordance with the multiple contour lines when the capturing angle matches the measuring condition.

2. The alarming and measuring method in claim 1, further comprising multiple steps after the step c):
c01) performing a noise filtering procedure to the depth graphic (4) to eliminate an image noise on a left side, a right side, and a back side of the target box (3) when the entire image of the target box (3) is in the depth graphic (4); and
c02) determining whether an image difference between the depth graphic (4) before the noise filtering procedure and the depth graphic (4) after the noise filtering procedure is greater than a threshold;
wherein the step f) comprises sending out the alarming signal when the entire image of the target box (3) is inexistent in the depth graphic (4), the capturing angle is unmatched with the measuring condition, or the image difference between the depth graphic (4) before the noise filtering procedure and the depth graphic (4) after the noise filtering procedure is greater than the threshold; the step g) comprises computing the volume related data of the target box (3) when the capturing angle matches the measuring condition, and the image difference between the depth graphic (4) before the noise filtering procedure and the depth graphic (4) after the noise filtering procedure is equal to or less than the threshold.

3. The alarming and measuring method in any of the preceding claims, further comprising multiple steps after the step c):
c03) obtaining a height face (34) and a top face (35) of the target box (3) with respect to the volume measuring apparatus (1) in accordance with the multiple contour lines when the entire image of the target box (3) is in the depth graphic (4);
c04) obtaining a datum plane for placing the target box (3) in the depth graphic (4);
c05) computing a vertical degree of the datum plane with respect to the height face (34) and a horizontal degree of the datum plane with respect to the top face (35); and
c06) determining whether the vertical degree and the horizontal degree respectively match a placing condition;
wherein the step f) comprises sending out the alarming signal when the entire image of the target box (3) is inexistent in the depth graphic (4), the capturing angle is unmatched with the measuring condition, the vertical rate is unmatched with the placing condition, or the horizontal rate is unmatched with the placing condition; the step g) comprises computing the volume related data of the target box (3) when the capturing angle matches the measuring condition, and the vertical rate and the horizontal rate match the placing condition.

4. The alarming and measuring method in any of the preceding claims, wherein the step c) comprises:
c1) performing a depth scan to the depth graphic (4) through multiple virtual vertical scanning lines and multiple virtual horizontal scanning lines to determine whether the multiple contour lines of the target box (3) are obtained, wherein multiple adjacent points on a same contour line of the multiple contour lines comprise a substantial same depth information;
c2) determining that the entire image of the target box (3) is inexistent in the depth graphic (4) when the multiple contour lines are unable to be obtained;
c3) obtaining a long edge (31) of the target box (3) from the multiple contour lines that is closest to the volume measuring apparatus (1) after the multiple contour lines are obtained;
c4) determining whether two end points (311) of the long edge (31) are in the depth graphic (4) in accordance with depth information;
c5) determining that the entire image of the target box (3) is inexistent in the depth graphic (4) when any of the end points (311) of the long edge (31) is inexistent in the depth graphic (4); and
c6) determining that the entire image of the target box (3) is in the depth graphic (4) when the two end points (311) of the long edge (31) are in the depth graphic (4).

5. The alarming and measuring method in any of the preceding claims, wherein the step d) comprises:
d1) computing a pitch angle of the volume measuring apparatus (1) with respect to the target box (3) in accordance with information of the multiple contour lines; and
d2) determining whether the pitch angle is within a first preset angle range;
wherein the step e) comprises determining that the capturing angle matches the measuring condition when the pitch angle is within the first preset angle range, and determining that the capturing angle is unmatched with the measuring condition when the pitch angle is inexistent in the first preset angle range.

6. The alarming and measuring method in any of the preceding claims, wherein the step d) further comprises:
d3) computing a skew angle and a roll angle of the volume measuring apparatus (1) with respect to the target box (3) in accordance with information of the multiple contour lines; and
d4) determining whether a sum of the skew angle and the roll angle is within a second preset angle range;
wherein the step e) comprises determining that the capturing angle matches the measuring condition when the pitch angle is within the first preset angle range, and the sum of the skew angle and the roll angle is within the second preset angle range, and determining that the capturing angle is unmatched with the measuring condition when the pitch angle is inexistent in the first preset angle range, or the sum of the skew angle and the roll angle is inexistent in the second preset angle range.

7. The alarming and measuring method in any of the preceding claims, wherein the volume measuring apparatus (1) comprises a guiding unit (15) electrically connected with the processor (10), wherein the step a) comprises emitting a laser beam to form a guiding object (151) in a cross manner by the guiding unit (15) when the trigger button (11) is pressed.

8. The alarming and measuring method in any of the preceding claims, wherein the volume measuring apparatus (1) comprises a structure light emitting unit (14) electrically connected with the processor (10), wherein the step a) comprises emitting an invisible structure light to form a reference pattern (141) by the structure light emitting unit (14) when the trigger button (11) is pressed,
wherein the reference pattern (141) is formed in a FoV (Field of View) of the first camera (12) and the second camera (13), the left image and the right image at lease comprises image of the reference pattern (141), and the processor (10) computes the reference pattern (141) in the left image and the right image to generate the depth graphic (4) in the step b).

9. The alarming and measuring method in any of the preceding claims, wherein the volume measuring apparatus (1) comprises a buzzer (17) electrically connected with the processor (10), wherein the step f) comprises controlling the buzzer (17) to send out the alarming signal in a sound manner.

10. The alarming and measuring method in any of the preceding claims, wherein the volume measuring apparatus (1) comprises a display unit (18) electrically connected with the processor (10), wherein the step f) comprises controlling the display unit (18) to send out the alarming signal in a light manner.

## Patentansprüche

1. Alarmierungs- und Messverfahren für eine Volumenmessvorrichtung (1), wobei die Volumenmessvorrichtung (1) mindestens einen Prozessor (10), einen Auslöseknopf (11), eine erste Kamera (12) und eine zweite Kamera (13) umfasst, wobei der Auslöseknopf (11), die erste Kamera (12) und die zweite Kamera (13) elektrisch mit dem Prozessor (10) verbunden sind, wobei das Alarmierungs- und Messverfahren umfasst:
a) Steuern der ersten Kamera (12) und der zweiten Kamera (13), um jeweils ein linkes Bild und ein rechtes Bild aufzunehmen, wenn der Auslöseknopf (11) gedrückt wird;
b) Berechnen des linken Bildes und des rechten Bildes durch den Prozessor (10), um entsprechend eine Tiefengrafik (4) zu erzeugen, wobei die Tiefengrafik (4) zumindest eine Tiefeninformation von mehreren charakteristischen Punkten umfasst, die gemeinsam in dem linken Bild und dem rechten Bild vorhanden sind;
c) Abtasten der Tiefengrafik (4), um zunächst festzustellen, ob ein ganzes Bild eines Zielkörpers (3) in der Tiefengrafik (4) enthalten ist;
d) Berechnen eines Erfassungswinkels der Volumenmessvorrichtung (1) in Bezug auf den Zielkörper (3) in Übereinstimmung mit mehreren Konturlinien des gesamten Bildes des Zielkörpers (3) in der Tiefengrafik (4), nur wenn das gesamte Bild des Zielkörpers (3) in der Tiefengrafik (4) ist;
e) Feststellung, ob der Erfassungswinkel mit einer Messbedingung übereinstimmt;
f) Aussenden eines Alarmsignals, wenn das gesamte Bild des Zielkörpers (3) in der Tiefengrafik (4) nicht vorhanden ist oder der Erfassungswinkel nicht mit der Messbedingung übereinstimmt; und
g) Berechnen von volumenbezogenen Daten des Zielkörpers (3) in Übereinstimmung mit den mehreren Konturlinien, wenn der Erfassungswinkel mit der Messbedingung übereinstimmt.

2. Alarmierungs- und Messverfahren nach Anspruch 1, ferner umfassend mehrere Schritte nach dem Schritt c):
c01) Durchführen eines Rauschfilterverfahrens an der Tiefengrafik (4), um ein Bildrauschen auf einer linken Seite, einer rechten Seite und einer Rückseite des Zielkörpers (3) zu beseitigen, wenn das gesamte Bild des Zielkörpers (3) in der Tiefengrafik (4) enthalten ist; und
c02) Bestimmen, ob eine Bilddifferenz zwischen der Tiefengrafik (4) vor dem Rauschfilterverfahren und der Tiefengrafik (4) nach dem Rauschfilterverfahren größer als ein Schwellenwert ist;
wobei der Schritt f) das Aussenden des Alarmsignals umfasst, wenn das gesamte Bild des Zielkörpers (3) in der Tiefengrafik (4) nicht vorhanden ist, der Erfassungswinkel nicht mit der Messbedingung übereinstimmt oder die Bilddifferenz zwischen der Tiefengrafik (4) vor dem Rauschfilterverfahren und der Tiefengrafik (4) nach dem Rauschfilterverfahren größer als der Schwellenwert ist; der Schritt g) umfasst das Berechnen der volumenbezogenen Daten des Zielkörpers (3), wenn der Erfassungswinkel mit der Messbedingung übereinstimmt und die Bilddifferenz zwischen der Tiefengrafik (4) vor dem Rauschfilterverfahren und der Tiefengrafik (4) nach dem Rauschfilterverfahren gleich dem Schwellenwert oder kleiner als dieser ist.

3. Alarmierungs- und Messverfahren nach einem der vorhergehenden Ansprüche ferner umfassend mehrere Schritte nach dem Schritt c):
c03) Erhalten einer Höhenfläche (34) und einer Oberseite (35) des Zielkörpers (3) in Bezug auf die Volumenmessvorrichtung (1) in Übereinstimmung mit den mehrfachen Konturlinien, wenn das gesamte Bild des Zielkörpers (3) in der Tiefengrafik (4) ist;
c04) Ermitteln einer Bezugsebene für die Platzierung des Zielkörpers (3) in der Tiefengrafik (4);
c05) Berechnen eines vertikalen Grades der Bezugsebene in Bezug auf die Höhenfläche (34) und eines horizontalen Grades der Bezugsebene in Bezug auf die Oberseite (35); und
c06) Feststellung, ob der vertikale Grad und der horizontale Grad jeweils einer Platzierungsbedingung entsprechen;
wobei der Schritt f) das Aussenden des Alarmsignals umfasst, wenn das gesamte Bild des Zielkörpers (3) in der Tiefengrafik (4) nicht vorhanden ist, der Erfassungswinkel nicht mit der Messbedingung übereinstimmt, die vertikale Rate nicht mit der Platzierungsbedingung übereinstimmt oder die horizontale Rate nicht mit der Platzierungsbedingung übereinstimmt; der Schritt g) das Berechnen der volumenbezogenen Daten des Zielkörpers (3) umfasst, wenn der Erfassungswinkel mit der Messbedingung übereinstimmt und die vertikale Rate und die horizontale Rate mit der Platzierungsbedingung übereinstimmen.

4. Alarmierungs- und Messverfahren nach einem der vorhergehenden Ansprüche, wobei der Schritt c) umfasst:
c1) Durchführen einer Tiefenabtastung der Tiefengrafik (4) durch mehrere virtuelle vertikale Abtastlinien und mehrere virtuelle horizontale Abtastlinien, um zu bestimmen, ob die mehreren Konturlinien des Zielkörpers (3) erhalten werden, wobei mehrere benachbarte Punkte auf einer gleichen Konturlinie der mehreren Konturlinien eine im Wesentlichen gleiche Tiefeninformation umfassen;
c2) Feststellung, dass das gesamte Bild des Zielkörperes (3) in der Tiefengrafik (4) nicht vorhanden ist, wenn die mehrfachen Konturlinien nicht erhalten werden können;
c3) Erhalten einer langen Kante (31) des Zielkörpers (3) aus den mehrfachen Konturlinien, die dem Volumenmessgerät (1) am nächsten ist, nachdem die mehrfachen Konturlinien erhalten wurden;
c4) Bestimmen, ob zwei Endpunkte (311) der langen Kante (31) in der Tiefengrafik (4) in Übereinstimmung mit der Tiefeninformation liegen;
c5) Feststellen, dass das gesamte Bild des Zielkörpers (3) in der Tiefengrafik (4) nicht vorhanden ist, wenn einer der Endpunkte (311) der langen Kante (31) in der Tiefengrafik (4) nicht vorhanden ist; und
c6) Feststellen, dass das gesamte Bild des Zielkörpers (3) in der Tiefengrafik (4) ist, wenn die beiden Endpunkte (311) der langen Kante (31) in der Tiefengrafik (4) sind.

5. Alarmierungs- und Messverfahren nach einem der vorhergehenden Ansprüche, wobei der Schritt d) umfasst:
d1) Berechnen eines Neigungswinkels der Volumenmessvorrichtung (1) in Bezug auf die Zielbox (3) in Übereinstimmung mit der Information der mehrfachen Konturlinien; und
d2) Bestimmung, ob der Neigungswinkel innerhalb eines ersten voreingestellten Winkelbereichs liegt;
wobei der Schritt e) die Bestimmung umfasst, dass der Erfassungswinkel mit der Messbedingung übereinstimmt, wenn der Neigungswinkel innerhalb des ersten voreingestellten Winkelbereichs liegt, und die Bestimmung, dass der Erfassungswinkel nicht mit der Messbedingung übereinstimmt, wenn der Neigungswinkel in dem ersten voreingestellten Winkelbereich nicht vorhanden ist.

6. Alarmierungs- und Messverfahren nach einem der vorhergehenden Ansprüche, wobei der Schritt d) weiterhin umfasst:
d3) Berechnen eines Schrägstellungswinkels und eines Rollwinkels der Volumenmessvorrichtung (1) in Bezug auf die Zielbox (3) in Übereinstimmung mit der Information der mehrfachen Konturlinien; und
d4) Bestimmen, ob die Summe des Schräglagewinkels und des Rollwinkels innerhalb eines zweiten voreingestellten Winkelbereichs liegt;
wobei der Schritt e) die Bestimmung umfasst, dass der Erfassungswinkel mit der Messbedingung übereinstimmt, wenn der Neigungswinkel innerhalb des ersten voreingestellten Winkelbereichs liegt und die Summe des Schrägwinkels und des Rollwinkels innerhalb des zweiten voreingestellten Winkelbereichs liegt, und die Bestimmung, dass der Erfassungswinkel nicht mit der Messbedingung übereinstimmt, wenn der Neigungswinkel in dem ersten voreingestellten Winkelbereich nicht vorhanden ist oder die Summe des Schrägwinkels und des Rollwinkels in dem zweiten voreingestellten Winkelbereich nicht vorhanden ist.

7. Alarm- und Messverfahren nach einem der vorhergehenden Ansprüche, wobei die Volumenmessvorrichtung (1) eine Führungseinheit (15) umfasst, die elektrisch mit dem Prozessor (10) verbunden ist, wobei der Schritt a) das Emittieren eines Laserstrahls umfasst, um ein Führungsobjekt (151) kreuzweise durch die Führungseinheit (15) zu bilden, wenn der Auslöseknopf (11) gedrückt wird.

8. Alarm- und Messverfahren nach einem der vorhergehenden Ansprüche, wobei die Volumenmessvorrichtung (1) eine Strukturlichtemissionseinheit (14) umfasst, die elektrisch mit dem Prozessor (10) verbunden ist, wobei der Schritt a) das Emittieren eines unsichtbaren Strukturlichts zur Bildung eines Referenzmusters (141) durch die Strukturlichtemissionseinheit (14) umfasst, wenn der Auslöseknopf (11) gedrückt wird,
wobei das Referenzmuster (141) in einem FoV (Field of View) der ersten Kamera (12) und der zweiten Kamera (13) gebildet wird, wobei das linke Bild und das rechte Bild mindestens ein Bild des Referenzmusters (141) umfasst, und der Prozessor (10) das Referenzmuster (141) in dem linken Bild und dem rechten Bild berechnet, um die Tiefengrafik (4) in dem Schritt b) zu erzeugen.

9. Alarmierungs- und Messverfahren nach einem der vorhergehenden Ansprüche, wobei die Volumenmessvorrichtung (1) einen Summer (17) umfasst, der elektrisch mit dem Prozessor (10) verbunden ist, wobei der Schritt f) die Steuerung des Summers (17) umfasst, um das Alarmsignal in einer akustischen Weise auszusenden.

10. Alarmierungs- und Messverfahren nach einem der vorhergehenden Ansprüche, wobei die Volumenmessvorrichtung (1) eine Anzeigeeinheit (18) umfasst, die elektrisch mit dem Prozessor (10) verbunden ist, wobei der Schritt f) die Steuerung der Anzeigeeinheit (18) umfasst, um das Alarmsignal auf eine helle Weise auszusenden.

## Revendications

1. Procédé d'alarme et de mesure pour un dispositif de mesure de volume (1), le dispositif de mesure de volume (1) comprenant au moins un processeur (10), un bouton de déclenchement (11), une première caméra (12) et une deuxième caméra (13), le bouton de déclenchement (11), la première caméra (12) et la deuxième caméra (13) étant connectés électriquement au processeur (10), le procédé d'alarme et de mesure comprenant
a) commander la première caméra (12) et la deuxième caméra (13) pour prendre respectivement une image gauche et une image droite lorsque le bouton de déclenchement (11) est pressé
b) calculer l'image gauche et l'image droite par le processeur (10) pour produire un graphique de profondeur (4) en conséquence, le graphique de profondeur (4) comprenant au moins une information de profondeur d'une pluralité de points caractéristiques qui sont communs à l'image gauche et à l'image droite ;
c) balayage du graphique de profondeur (4) pour déterminer d'abord si une image entière d'un corps cible (3) est contenue dans le graphique de profondeur (4) ;
d) calculer un angle de détection du dispositif de mesure de volume (1) par rapport au corps cible (3) en fonction de plusieurs lignes de contour de l'image entière du corps cible (3) dans le graphique de profondeur (4), uniquement lorsque l'image entière du corps cible (3) est dans le graphique de profondeur (4) ;
e) déterminer si l'angle de détection correspond à une condition de mesure ;
f) émettre un signal d'alarme si l'image complète du corps cible (3) n'est pas présente dans le graphique de profondeur (4) ou si l'angle de détection ne correspond pas à la condition de mesure ; et
g) calculer des données liées au volume du corps cible (3) en fonction de la pluralité de lignes de contour lorsque l'angle de détection correspond à la condition de mesure.

2. Procédé d'alarme et de mesure selon la revendication 1, comprenant en outre plusieurs étapes selon l'étape c) :
c01) effectuer un processus de filtrage de bruit sur le graphique de profondeur (4) afin d'éliminer un bruit d'image sur un côté gauche, un côté droit et un côté arrière du corps cible (3) lorsque l'image entière du corps cible (3) est incluse dans le graphique de profondeur (4) ; et
c02) déterminer si une différence d'image entre le graphique de profondeur (4) avant le procédé de filtrage de bruit et le graphique de profondeur (4) après le procédé de filtrage de bruit est supérieure à une valeur seuil ;
dans lequel l'étape f) comprend l'émission du signal d'alarme lorsque l'image entière du corps cible (3) n'est pas présente dans le graphique de profondeur (4), l'angle de détection ne correspond pas à la condition de mesure ou la différence d'image entre le graphique de profondeur (4) avant le procédé de filtrage de bruit et le graphique de profondeur (4) après le procédé de filtrage de bruit est supérieure à la valeur seuil ; l'étape g) comprend le calcul des données relatives au volume du corps cible (3) lorsque l'angle de détection coïncide avec la condition de mesure et que la différence d'image entre le graphique de profondeur (4) avant le procédé de filtrage du bruit et le graphique de profondeur (4) après le procédé de filtrage du bruit est égale ou inférieure à la valeur seuil.

3. Procédé d'alarme et de mesure selon l'une quelconque des revendications précédentes, comprenant en outre plusieurs étapes selon l'étape c) :
c03) l'obtention d'une surface de hauteur (34) et d'une surface supérieure (35) du corps cible (3) par rapport au dispositif de mesure de volume (1) en fonction des lignes de contour multiples lorsque l'image entière du corps cible (3) est dans le graphique de profondeur (4) ;
c04) déterminer un plan de référence pour le placement du corps cible (3) dans le graphique de profondeur (4) ;
c05) calculer un degré vertical du plan de référence par rapport à la surface de hauteur (34) et un degré horizontal du plan de référence par rapport à la surface supérieure (35) ; et
c06) déterminer si le degré vertical et le degré horizontal correspondent chacun à une condition de placement ;
dans lequel l'étape f) comprend l'émission du signal d'alarme lorsque l'image entière du corps cible (3) n'est pas présente dans le graphique de profondeur (4), l'angle de détection ne correspond pas à la condition de mesure, le taux vertical ne correspond pas à la condition de placement ou le taux horizontal ne correspond pas à la condition de placement ; l'étape g) comprend le calcul des données relatives au volume du corps cible (3) lorsque l'angle d'acquisition coïncide avec la condition de mesure et que le taux vertical et le taux horizontal coïncident avec la condition de placement.

4. Procédé d'alarme et de mesure selon l'une quelconque des revendications précédentes, dans lequel l'étape c) comprend :
c1) effectuer un balayage en profondeur du graphique de profondeur (4) par une pluralité de lignes de balayage vertical virtuelles et une pluralité de lignes de balayage horizontal virtuelles pour déterminer si la pluralité de lignes de contour du corps cible (3) sont obtenues, dans lequel une pluralité de points adjacents sur une même ligne de contour de la pluralité de lignes de contour comprennent une information de profondeur sensiblement égale ;
c2) constater que l'image complète du corps cible (3) n'est pas présente dans le graphique de profondeur (4) si les lignes de contour multiples ne peuvent pas être obtenues ;
c3) l'obtention, à partir des lignes de contour multiples, d'un bord long (31) du corps cible (3) qui est le plus proche du dispositif de mesure de volume (1) après que les lignes de contour multiples ont été obtenues ;
c4) déterminer si deux points d'extrémité (311) du bord long (31) dans le graphique de profondeur (4) sont en correspondance avec l'information de profondeur ;
c5) déterminer que l'image entière du corps cible (3) n'est pas présente dans le graphique de profondeur (4) si l'un des points d'extrémité (311) du bord long (31) n'est pas présent dans le graphique de profondeur (4) ; et
c6) déterminer que l'image entière du corps cible (3) est dans le graphique de profondeur (4) lorsque les deux points d'extrémité (311) du bord long (31) sont dans le graphique de profondeur (4).

5. Procédé d'alarme et de mesure selon l'une quelconque des revendications précédentes, dans lequel l'étape d) comprend :
d1) calculer un angle d'inclinaison du dispositif de mesure de volume (1) par rapport à la boîte cible (3) en fonction des informations des lignes de contour multiples ; et
d2) déterminer si l'angle d'inclinaison se situe à l'intérieur d'une première plage angulaire préréglée ;
dans lequel l'étape e) comprend la détermination que l'angle de détection correspond à la condition de mesure lorsque l'angle d'inclinaison est dans la première plage angulaire préétablie, et la détermination que l'angle de détection ne correspond pas à la condition de mesure lorsque l'angle d'inclinaison n'est pas présent dans la première plage angulaire préétablie.

6. Procédé d'alarme et de mesure selon l'une quelconque des revendications précédentes, dans lequel l'étape d) comprend en outre :
d3) calculer un angle d'inclinaison et un angle de roulis du dispositif de mesure de volume (1) par rapport à la boîte cible (3) en fonction des informations des lignes de contour multiples ; et
d4) Déterminer si la somme de l'angle d'inclinaison et de l'angle de roulis se situe dans une deuxième plage angulaire prédéfinie ;
dans lequel l'étape e) comprend la détermination que l'angle de détection correspond à la condition de mesure lorsque l'angle d'inclinaison est dans la première plage angulaire préétablie et que la somme de l'angle d'inclinaison et de l'angle de roulis est dans la seconde plage angulaire préétablie, et la détermination que l'angle de détection ne correspond pas à la condition de mesure lorsque l'angle d'inclinaison n'est pas présent dans la première plage angulaire préétablie ou que la somme de l'angle d'inclinaison et de l'angle de roulis n'est pas présente dans la seconde plage angulaire préétablie.

7. Procédé d'alarme et de mesure selon l'une quelconque des revendications précédentes, dans lequel le dispositif de mesure de volume (1) comprend une unité de guidage (15) connectée électriquement au processeur (10), dans lequel l'étape a) comprend l'émission d'un faisceau laser pour former un objet de guidage (151) en croix à travers l'unité de guidage (15) lorsque le bouton de déclenchement (11) est enfoncé.

8. Procédé d'alarme et de mesure selon l'une quelconque des revendications précédentes, dans lequel le dispositif de mesure de volume (1) comprend une unité d'émission de lumière structurelle (14) connectée électriquement au processeur (10), dans lequel l'étape a) comprend l'émission d'une lumière structurelle invisible pour former un motif de référence (141) par l'unité d'émission de lumière structurelle (14) lorsque le bouton de déclenchement (11) est enfoncé,
dans lequel le motif de référence (141) est formé dans un FoV (champ de vision) de la première caméra (12) et de la seconde caméra (13), l'image gauche et l'image droite comprenant au moins une image du motif de référence (141), et le processeur (10) calcule le motif de référence (141) dans l'image gauche et l'image droite pour produire le graphique de profondeur (4) à l'étape b).

9. Procédé d'alarme et de mesure selon l'une des revendications précédentes, dans lequel le dispositif de mesure de volume (1) comprend un buzzer (17) relié électriquement au processeur (10), l'étape f) comprenant la commande du buzzer (17) pour émettre le signal d'alerte de manière sonore.

10. Procédé d'alarme et de mesure selon l'une des revendications précédentes, dans lequel le dispositif de mesure de volume (1) comprend une unité d'affichage (18) reliée électriquement au processeur (10), l'étape f) comprenant la commande de l'unité d'affichage (18) pour émettre le signal d'alerte de manière lumineuse.
